# EUROPÄISCHE PATENTSCHRIFT

(11) **EP 0 385 217 B1**
(45) Veröffentlichungstag und Bekanntmachung des Hinweises auf die Patenterteilung: **27.04.1994**
(21) Anmeldenummer: 90103140.1
(22) Anmeldetag: 19.02.1990
(51) Int. Cl.: B26D 7/26, B26F 1/44

(54) **Vorrichtung zum Stanzen von blattförmigem Material, insbesondere Etikettenmaterial**
Apparatus for stamping a sheet-like material, in particular a labelling material
Dispositif pour découper des matériaux en feuilles, en particulier des étiquettes

(30) Priorität: 28.02.1989 DE 3906290
(43) Veröffentlichungstag der Anmeldung: 05.09.1990
(73) Patentinhaber: Gerhardt, Jorgen, DK-2770 Kastrup (DK)
(72) Erfinder: Gerhardt, Jorgen, DK-2770 Kastrup (DK)
(74) Vertreter: Fincke, Karl Theodor, Dipl.-Phys. Dr.

(56) Entgegenhaltungen:
- FR-A- 989 659
- GB-A- 2 133 734
- US-A- 2 863 337
- US-A- 4 694 672
- US-A- 4 934 231
- MACHINE DESIGN. vol. 46, no. 29, 28 November 1974, CLEVELAND US Seiten 69 - 71;HAROLD KAUFMANN: "TWO-ROLL FORMING FOR IMPROVED SPEED AND PRECISION"
- METALL. vol 34, no. 4, April 1980, BERLIN & HEIDELBERG Seiten 320-323 ; KOPP & HORNAUER : "KUGELSTRAHL-UMFORMEN UND-RICHTEN".

## Beschreibung

Die Erfindung betrifft ein Verfahren zur Herstellung einer zum Stanzen von blattförmigem Material, insbesondere Etikettenmaterial, dienenden, aus einem planen Stahlblech gebogenen, im Paßsitz auf einer Trägerwalze anzuordnenden Platte, deren Außenfläche mit durch Ätzen des Stahlblechs gebildeten, - vorzugsweise messerartig geschärften - Stanzstegen versehen ist, und eine Vorrichtung zur Durchführung des Verfahrens mit einer Düse, aus der ein Partikelstrahl zu blasen ist.
Bei einem nach der GB-A-2133734 bekannten Verfahren dieser Art wird eine gebogene Platte auf einem Sektor des Umfangs der Trägerwalze befestigt. Die in Achsrichtung der Trägerwalze verlaufenden Kantenbereiche der Platte sind spitzwinklig nach innen gebogen. Der eine Kantenbereich ist in einen Schlitz gesteckt, in den anderen Kantenbereich greift eine Spannase ein.

Eine solche Platte ist nicht einfach und rasch gegen eine andere Platte auszutauschen und erfordert eine verhältnismäßig aufwendige Konstruktion der Trägerwalze.

Nach der FR-A-989659 ist eine aus einem Stahlblech gebogene Hülse bekannt, die eine Trägerwalze umschließt. Die einander zugewandten Kanten des Stahlblechs sind zur Bildung der Hülse miteinander verbunden.

Nach der Zeitschrift "Metall" 34, Heft 4, April 1980, S. 320 bis 322, ist es bekannt, Sicken an einem Rohr durch einen Partikelstrahl zu erzeugen; hierzu ist gemäß dem Oberbegriff des Anspruchs 12 eine Düse vorgesehen, aus der ein Partikelstrahl zu blasen ist. Allgemein ist dort beschrieben, daß man mit Partikelstrahlen Bleche umformen kann.

Aufgabe der Erfindung ist es, ein Verfahren nach dem Oberbegriff des Anspruchs 1 anzugeben, mittels dem eine dem Umfang einer rundum zylindrischen Trägerwalze formstabil angepaßte Platte einfach und rasch auf die Trägerwalze aufzubringen und von ihr abzunehmen, also auszutauschen ist, ohne daß sie, wenn sie sich auf der Trägerwalze befindet, bei einer Beanspruchung durch übliches Stanzen in Umfangsrichtung verrutscht.

Die Lösung dieser Aufgabe ist im Kennzeichen des Anspruchs 1 angegeben.

Um die Hülse auf dem Zylinder dicht festzuhalten, geht man bevorzugt gemäß Anspruch 2 vor.

Bevorzugte Materialien für das Stahlblech der Hülse sind in den Ansprüchen 3 und 4 angegeben.

Um eine rundum möglichst geschlossene Hülse zu erhalten, ist eine Ausbildung gemäß Anspruch 5 bevorzugt.

Eine besonders einfach und wirksam auszuführende Oberflächenbehandlung ist in Anspruch 6 angegeben.

Um die Hülse zu schließen, sind die Vorgehensweisen nach Anspruch 7 und 8 bevorzugt.

Um eine Anpassung der einander zugewandten Kanten der Hülse an die Form der Stanzstege zu erreichen, ist bevorzugt eine Ausbildung gemäß Anspruch 9 vorgesehen.

Um die Herstellung des Zylinders zu vereinfachen, ist bevorzugt eine Ausbildung gemäß Anspruch 10 vorgesehen.

Um die Stanzstege in vorgegebenem Abstand von dem zu stanzenden, blattförmigen Material zu halten, ist bevorzugt eine Ausbildung gemäß Anspruch 11 vorgesehen.

Zur Herstellung der Hülsen hat sich besonders eine Vorrichtung nach Anspruch 12 bewährt. In Anpassung an den Durchmesser der herzustellenden Hülsen brauchen bei dieser Vorrichtung die Widerlagerzylinder nur ausgetauscht zu werden. Die Krümmung des Stahlblechs zur Hülsenform bewirkt der Partikelstrahl.

Um eine gleichmäßige Führung des Stahlblechs über die Oberseite des Widerlagerzylinders zu erhalten, ist eine Ausbildung der Vorrichtung nach Anspruch 13 bevorzugt.

Um das Stahlblech in das Gehäuse in einfacher Weise einführen zu können, ist eine Ausbildung der Vorrichtung gemäß Anspruch 14 bevorzugt.

Um die Partikel des Partikelstrahls wiederholt verwenden zu können, ist eine Ausbildung gemäß Anspruch 15 bevorzugt.

Um Staub aus dem Gehäuse abzuführen, ist eine Ausbildung gemäß Anspruch 16 bevorzugt.

Um das Stahlblech an den Widelagerzylinder bei der Partikelbestrahlung andrücken zu können, ist eine Ausbildung gemäß Anspruch 17 bevorzugt.

Die Erfindung wird im folgenden an einem Ausführungsbeispiel unter Hinweis auf die beigefügten Zeichnungen beschrieben.

Fig. 1 zeigt ein Stahlblech mit Stanzstegen, bevor es zu einer Hülse gebogen wird.

Fig. 2 zeigt ein um eine magnetisierte Umfangsfläche eines Zylinders gebogenes Stahlblech nach Fig. 1.

Fig. 3 zeigt die von dem Zylinder nach Fig. 2 abgenommene Hülse.

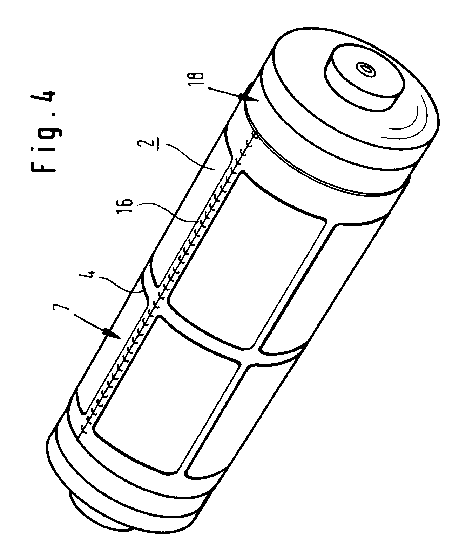

Fig. 4 zeigt die Hülse nach Fig. 3, nachdem ihre einander zugewandten Kanten verschweißt sind.

Fig. 5 zeigt die Hülse nach Fig. 4, nachdem sie auf eine Trägerwalze im Paßsitz aufgebracht ist.

Die Fig. 6, 7 und 8 zeigen Ausbildungen von Hülsen, deren einander zugewandte Kanten an die Form der Stanzstege angepaßt sind.

Fig. 9 zeigt eine vorteilhafte Ausführungsform des Zylinders.

Fig. 9a zeigt vergrößert einen Bereich des mit wechselnden Polen magnetisierten Streifens des Zylinders gemäß Fig. 9.

Fig. 10 zeigt eine Vorrichtung zur Herstellung der Hülsen in Ansicht teilweise im Schnitt.

Fig. 11 zeigt die Vorrichtung nach Fig. 10 in Blickrichtung XII in Fig. 10.

Fig. 12 zeigt die Vorrichtung nach Fig. 10 in Blickrichtung XII in Fig. 10.

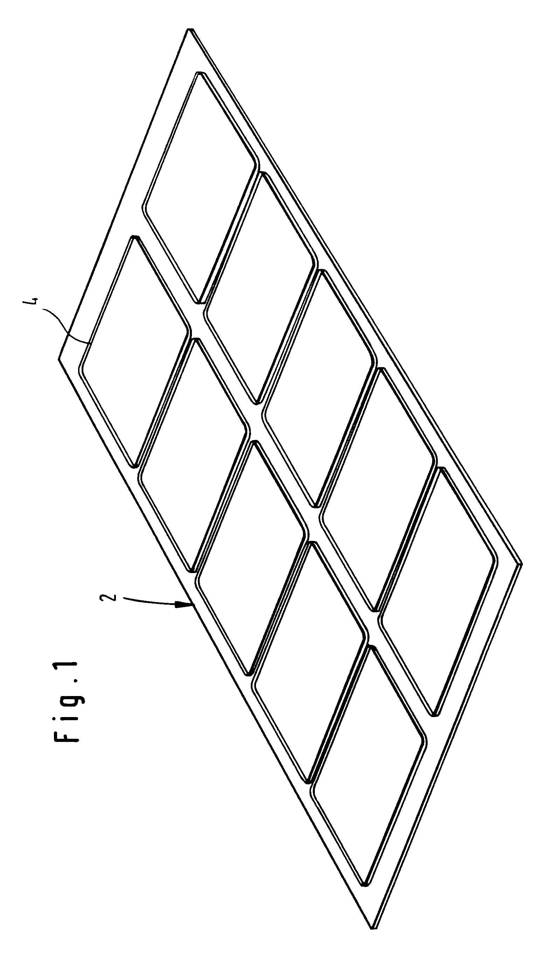

Fig. 1 zeigt ein Stahlblech 2 aus einem Federstahl der Qualität C 67 nach DIN 17 222/1544 P.

Der Stahl dieses Stahlblechs hat folgende Zusammensetzung:

| | | | |
|---|---|---|---|
| C | 0,65 - 0,72 | P | Max. 0,045 |
| Si | 0,15 - 0,35 | S | Max. 0,045 |
| Mn | 0,60 - 0,90 | Cr | etwa 0,20 |

Blechdicken zwischen 0,44 mm und 0,63 mm haben sich derzeit besonders bewährt. Allgemein sind jedoch Blechdicken von 0,35 bis 1,2 mm, insbesondere 0,4 bis 1,1 mm bevorzugt.

Die Härte des Stahlblechs liegt zwischen Hrc 45 und Hrc 54.

Das Stahlblech 2 wird zunächst in die in Fig. 1 dargestellte Umrißform geschnitten und dann beidseitig mit Wasser abgebürstet.

Anschließend wird das Stahlblech mit Wasser erneut abgebürstet. Hierzu werden feinere Bürsten verwendet als beim erstenmal.

Daraufhin wird das Stahlblech 2 erhitzt, beispielsweise auf 125°C.

Anschließend wird eine nach Belichten ätzfeste Fotoemulsion auf das Stahlblech 2 aufgebracht und zur Härtung erhitzt, beispielsweise auf 110°C.

Anschließend wird die Emulsion mit einem Muster belichtet, das den zu bildenden Stanzstegen 4 entspricht. Die Bereiche der Emulsion, die den Stanzstegen 4 entsprechen, werden dadurch durch ein Ätzmittel unangreifbar.

Anschließend wird das Stahlblech 2 erneut erhitzt, beispielsweise auf 110°C.

Anschließend wird die Emulsion mit einem Ätzmittel behandelt, wodurch das Stahlblech 2 mit Ausnahme des Bereichs der Stanzstege 4 dünner wird.

Anschließend wird die auf den Stanzstegen 4 haftende ätzfeste Emulsion entfernt.

Anschließend werden dem Stahlblech 2 rundum die gewünschten genauen Abmessungen gegeben und die Stanzstege 4 messerartig geschärft.

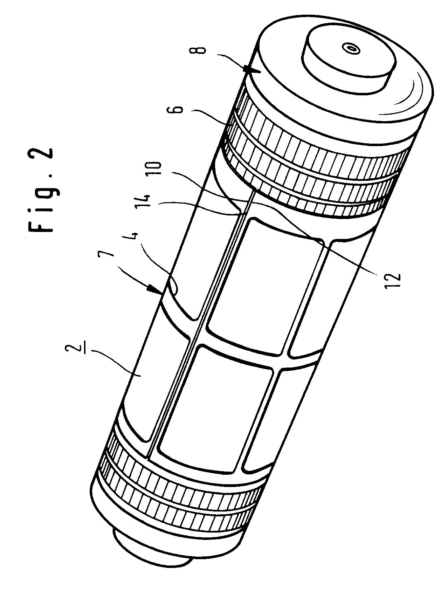

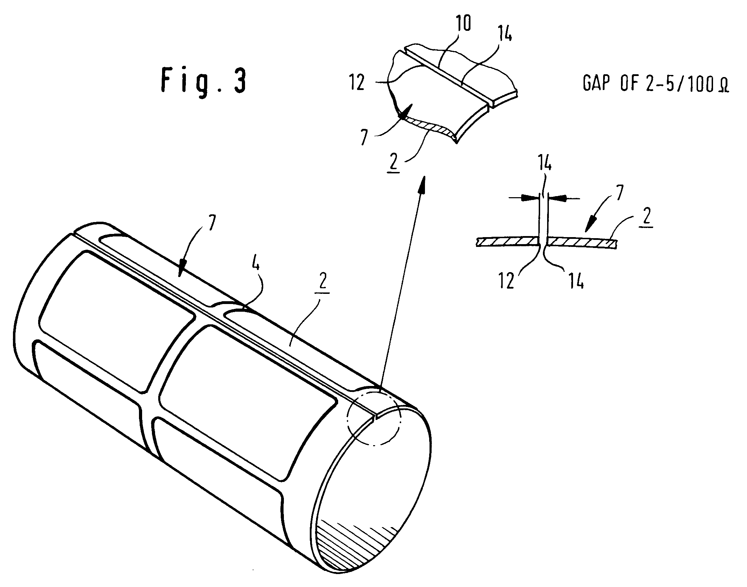

Fig. 2 zeigt einen handelsüblichen, mit einer magnetisierten Umfangsfläche 6 versehenen Zylinder 8, um den das Stahlblech 2 mit den an ihm ausgebildeten Stanzstegen 4 gebogen ist. Zwischen den einander zugewandten Kanten 10,12 des Stahlblechs 2 befindet sich ein Spalt 14 von 0,02 bis 0,05 mm Weite (besser zu sehen in Fig. 3).

Bevorzugt bestehen die Partikel des Partikelstrahls aus Natron-Kalk-Glas folgender Spezifikation:
Typ AH Siebmaschenweite: 106, 90, 45 PAN-Form(rund) in µm
Siebrückhalt: 0 bis 2, 0 bis 10, 80 bis 100, 0 bis 20%
Rundheit: 85 %
Korngrößenverteilung: mindestens 80 Gew.-% kleiner als die kleinste Siebmaschenweite; höchstens 10 Gew.-% größer als die größeren Maschenweiten (Test nach B.S. 6088)
Gehalt an Eisen: maximal 0,1 Gew.-%
Gehalt an Siliciumdioxid: mindestens 67 Gew.-% (Test nach B.S. 6088)
spezifisches Gewicht: 2,45 bis 2,55 g/cm³
Härte: Hrc 48 bis Hrc 50
Farbe: klar oder kristallisch, frei von Oberflächenfilmen
gebrochene oder kantige Körner maximal 3 % (gezählt nach B.S. 6088)
Lufteinschlüsse: nicht mehr als 10 % der Körner enthalten Lufteinschlüsse, die größer sind als 25% ihrer Fläche bei mikroskopischer Betrachtung in einer Flüssigkeit mit dem Brechungsindex 1,5.

Der Partikelstrahl wird auf das Stahlblech 2 aus einer Düse einer Weite von 12,7 mm aus einer Entfernung von 100 mm mit einem Druck von 2,5 bar geblasen. Die Düse wird in Achsrichtung eines Biegezylinders mit einer Geschwindigkeit von 10 m/min hin- und herbewegt. Durch den Partikelstrahl wird jeweils ein Streifen von 10 mm Breite beblasen. Nach jedem Durchgang wird die Umfangsfläche des Biegezylinders um etwa 10 mm gedreht. Dieses Verfahren wird fortgesetzt, bis die gesamte Außenfläche des Stahlblechs mit dem Sandstrahl beblasen worden ist.

Durch das Beblasen mit dem Sandstrahl stoßen die Sandkörner auf und etwas in die Oberfläche des Stahlblechs 2 und vergrößern so das Flächenmaß der Außenseite des Stahlblechs 2 gegenüber dem Flächenmaß der Innenseite des Stahlblechs 2. Daher behält das Stahlblech 2 sehr genau die Form, die es auf dem Biegezylinder erhalten hat.

Ist dies alles geschehen, so wird die aus dem Stahlblech 2 gebildete Hülse 7 vom Biegezylinder abgezogen, wobei sie ihre Form beibehält, wie dies Fig. 3 zeigt.

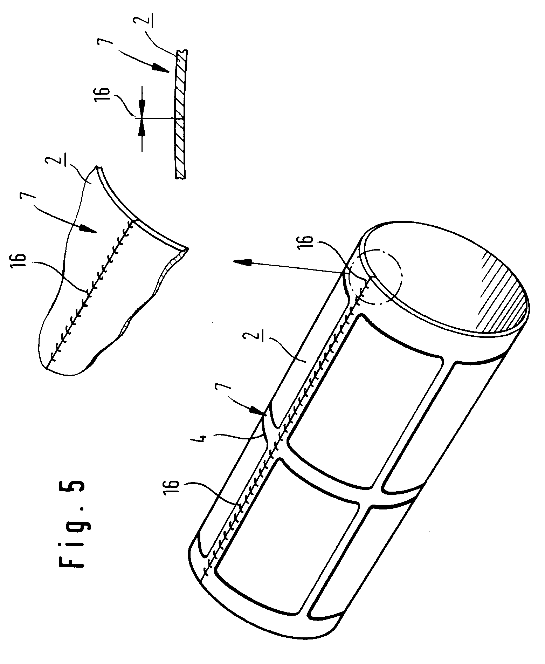

Anschließend wird die aus dem Stahlblech 2 gebogene Hülse 7 nach Fig. 3 auf einen gehärteten, nicht magnetischen Stahlzylinder gesteckt, der dengleichen Radius hat wie der Biegezylinder. Hierbei kann es sich bereits um eine Trägerwalze 18 (Fig. 5) in einer Stanzmaschine handeln. Auf diesem Zylinder oder der Trägerwalze 18 werden die einander zugewandten Kanten des zur Hülse gebogenen Stahlblechs 2 miteinander verschweißt. Schließlich wird die dadurch nunmehr fertige Hülse 7 von dem Zylinder oder der Trägerwalze 18 (Schweißnaht 16) abgezogen und steht zur Benutzung bereit.

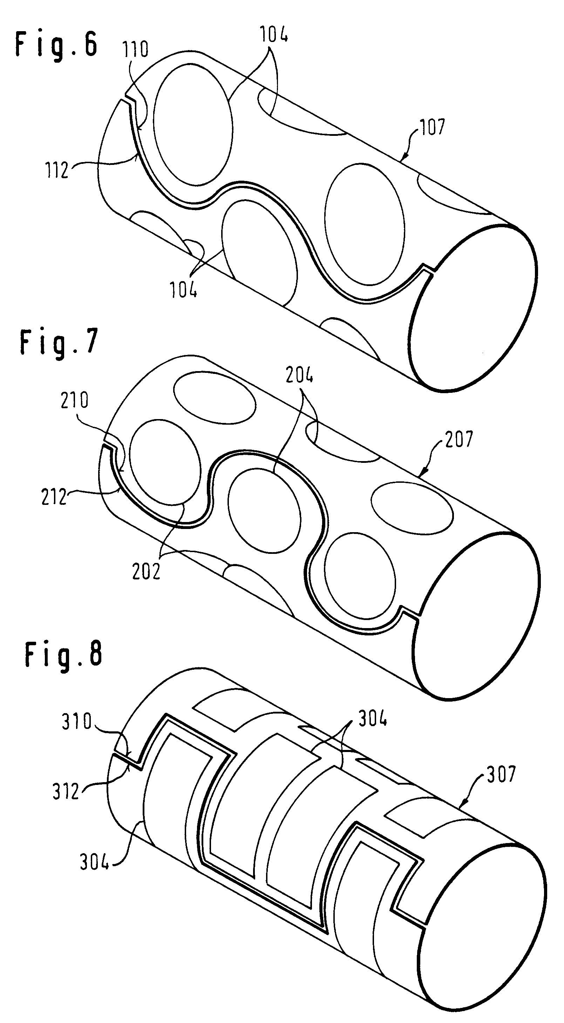

Fig. 6 zeigt eine Hülse 107, deren Stanzstege 104 kreisförmig und so angeordnet sind, daß es zweckmäßig ist, die einander zugewandten Kanten 110, 112 der Hülse 107 wellenförmig zu krümmen.

Fig. 7 zeigt eine Hülse 207, deren Stanzstege 204 ebenfalls kreisförmig, jedoch so angeordnet sind, daß die einander zugewandten Kanten 210, 212 eine Wellenform haben, deren Halbwellen um mehr als 180° gekrümmt sind.

Fig. 8 zeigt eine Hülse 307, bei der die Stanzstege 304 rechteckförmig und so angeordnet sind, daß es zweckmäßig ist, die einander zugewandten Kanten 310, 312 der Hülse mäanderförmig verlaufen zu lassen.

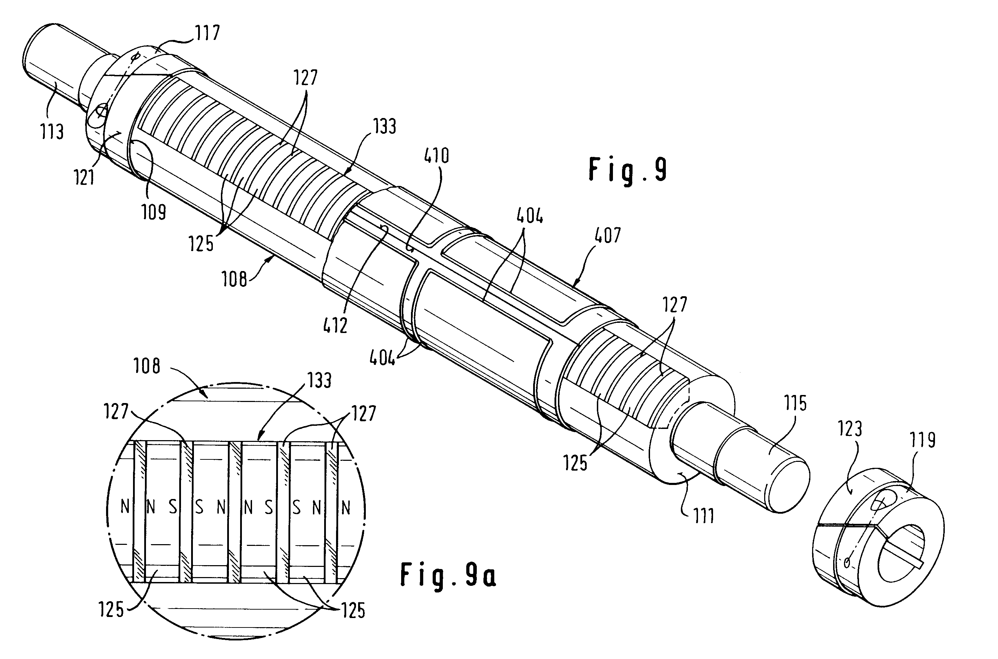

Fig. 9 zeigt einen Zylinder 108, der nur längs eines axialen Streifens mit wechselnden Polen magnetisiert ist, weil dies ausreicht, um die Randbereiche der einander zugewandten Kanten 410, 412 der auf dem Zylinder 108 befindlichen Hülse 407 fest an den Zylinder zu ziehen.

Fig. 9a zeigt die Polung der Magneten 125, aus denen der Streifen 133 gebildet ist. Benachbarte Magnete 125 sind stets gegensinnig gepolt und durch Distanzstücke 127 voneinander getrennt.
Die Stirnseiten 109 und 111 des Zylinders 108 gehen in Lagerzapfen 113, 115 über, auf denen geschlitzte Laufringe 117, 119 mit nicht dargestellten Schrauben festzusetzen sind. Die Laufringe 117,119 weisen axial an den Zylinder 108 angrenzend Umfangsflächen 121, 123 auf, die etwas über die Stanzstege 404 der Hülse 407 überstehen, beispielsweise 1/100 mm. In manchen Fällen reicht ein Laufring 117 bzw. 119 aus.

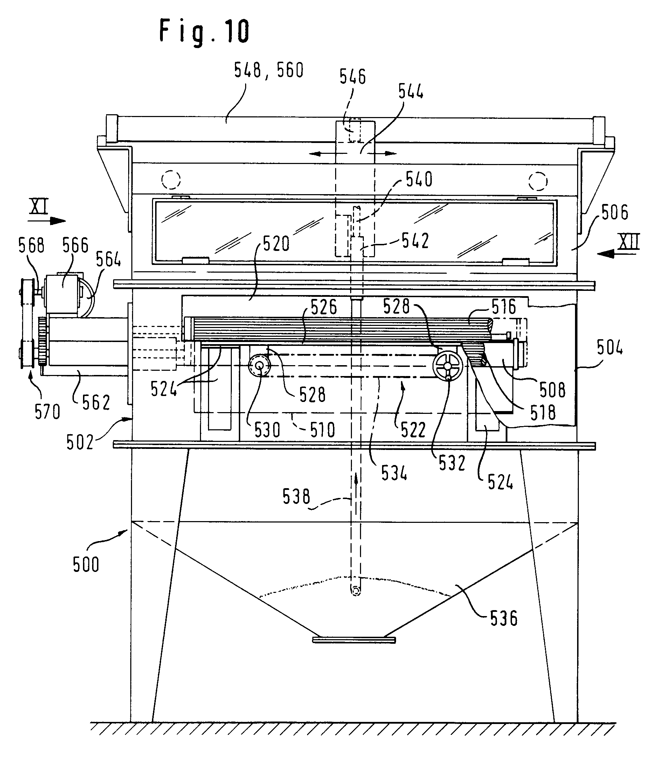

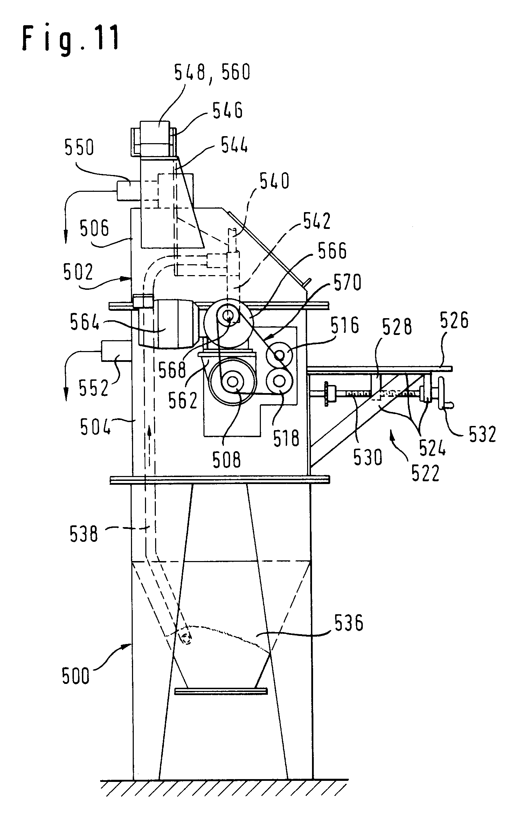

Die in den Fig. 10 bis 12 dargestellte Vorrichtung weist ein Gestell 500 auf, auf dem ein Gehäuse 502 bestehend aus einem Unterteil 504 und einem Oberteil 506 angeflanscht ist.

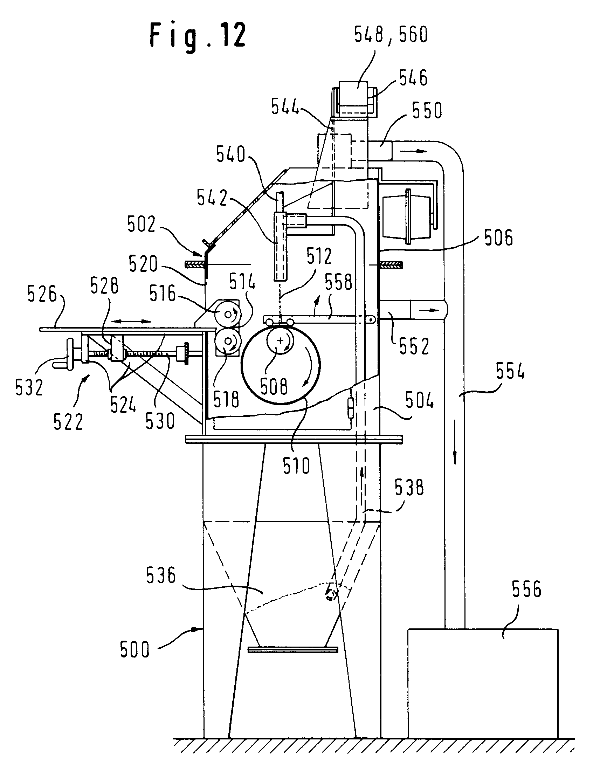

In dem Gehäuse ist eine anzutreibende Mitnehmerwalze 508 für einen austauschbaren Widerlagerzylinder 510 drehbar gelagert. Über den Widerlagerzylinder 510 ist in Fig. 12 von links ein nicht dargestelltes planes, mit den Stanzstegen versehenes Stahlblech zu schieben, das zu einer Hülse gekrümmt werden soll. Auf das Stahlblech wird in dem Gehäuse 502 von oben im wesentlichen radial zum Widerlagerzylinder 510 ein in Axialrichtung des Widerlagerzylinders 510 hin- und hergehender Partikelstrahl 512 geblasen. Zur Zuförderung des Stahlblechs zur Oberseite des Widerlagerzylinders 510 befindet sich in dem Gehäuse 502 neben der Oberseite des Widerlagerzylinders 510 eine Zuführungsklemmlinie 514 zwischen zwei synchron zu dem Widerlagerzylinder 510, d. h. der Mitnehmerwalze 508 angetriebenen Zuführungswalzen 516, 518.

Das Gehäuse 502 weist in Höhe der Zuführungsklemmlinie 514 und darüber eine Zuführungsöffnung 520 für das Stahlblech auf, in die das Stahlblech mittels einer außerhalb des Gehäuses 502 am Gehäuse 502 angeordneten Fördereinrichtung 522 einzuführen ist. Im vorliegenden Ausführungsbeispiel besteht die Fördereinrichtung 522 aus einer an äußeren Stützen 524 gelagerten Tischplatte 526 mit zwei nach unten gerichteten Laufmutteransätzen 528, die an den Stützen und am Gehäuse gelagerte Laufspindeln 530 umfassen. Eine dieser Laufspindeln 530 ist mit einer Handkurbel 532 anzutreiben. Beide Laufspindeln 530 sind durch einen Kettentrieb 534 miteinander verbunden.

Das Gehäuse 502 weist einen Sammelraum 536 für die Partikel des Partikelstrahls 512 auf, von dem eine Ansaugleitung 538 für die Partikel ausgeht. Die Ansaugleitung 538 mündet in einer mit Druckluft durch eine Leitung 540 zu beschickenden, in Axialrichtung des Widerlagerzylindes 510 hin- und herbewegbaren, den Partikelstrahl 512 erzeugenden Düse 542. Die Hin- und Herbewegung der Düse 542 erfolgt dadurch, daß die Düse 502 an einem Träger 544 angebracht ist, der seinerseits an einem in einem Zylinder 548 hin- und herschiebbaren Kolben 546 befestigt ist. Von der Oberseite des Gehäuseteils 506 und von der Rückseite des Gehäuseteils 504 sind Absaugleitungen 550 und 552 abgeführt, die über eine Sammelleitung 554 in einer nicht näher dargestellten, mit einem Staubfilter versehenen Absaugvorrichtung 556 enden.

Oberhalb des Widerlagerzylinders 510 ist in dem Gehäuse 502 ein absenkbarer und anhebbarer Niederhalter 558 zum Andrücken des Stahlblechs an die Oberseite des Widerlagerzylinders 510 angeordnet.

Zum Antrieb des Kolbens 546 und somit zum Hin- und Herbewegen der Düse 542 befindet sich auf der Oberseite des Gehäuses 502 ein Motor 560.

Zum Antrieb der Zuführungswalzen 516, 518 und der Mitnehmerwalze 508 befindet sich an der in Fig. 10 linken Seite des Gehäuses 502 an einem Träger 562 ein Motor 564 mit einem 90°-Umlenkgetriebe 566, dessen Ausgangswelle 568 über ein Riemenscheibengetriebe 570 den genannten Antrieb bewirkt.

## Patentansprüche

1. Verfahren zur Herstellung einer zum Stanzen von blattförmigem Material, insbesondere Etikettenmaterial, dienenden, aus einem planen Stahlblech (2) gebogenen, im Paßsitz auf einer Trägerwalze (18) anzuordnenden Platte, deren Außenfläche mit durch Ätzen des Stahlblechs (2) gebildeten - vorzugsweise messerartig geschärften - Stanzstegen (4; 104; 204; 304; 404) versehen ist,
**dadurch gekennzeichnet,**
daß ein planes Stahlblech (2), dessen Außenfläche mit den Stanzstegen (4; 104; 204; 304; 404) versehen ist, über einen in einem Gehäuse (502) umlaufenden, austauschbaren im wesentlichen den gleichen Radius wie die Trägerwalze (18) aufweisenden Widerlagerzylinder (8; 510) von einer Seite dieses Widerlagerzylinders (8; 510) aus geschoben wird, daß auf das Stahlblech (2) im wesentlichen radial zum Widerlagerzylinder (8; 510) ein in Axialrichtung des Widerlagerzylinders (8; 510) hin- und hergehender Partikelstrahl (512) geblasen wird und daß die einander zugewandten Kanten (10, 12; 110, 112; 210, 212; 310, 312; 410, 412) der dadurch entstehenden, gebogenen Platte auf der Trägerwalze (18) oder auf einem im wesentlichen den gleichen Radius wie die Trägerwalze (18) aufweisenden Zylinder (108) zur Bildung einer Hülse (7; 107; 207; 307; 407) miteinander verbunden werden.

2. Verfahren nach Anspruch 1, dadurch gekennzeichnet, daß der Zylinder (8; 108) wenigstens abschnittweise einer magnetisierten Umfangsfläche (6) versehen ist.

3. Verfahren nach Anspruch 1 oder 2, dadurch gekennzeichnet, daß das Stahlblech (2) die Qualität C 67 nach DIN 17222/1544P aufweist.

4. Verfahren nach einem der vorhergehenden Ansprüche, dadurch gekennzeichnet, daß die Dicke des Stahlblechs (2) 0,35 bis 1,2 mm, bevorzugt 0,4 bis 1,1 mm, beträgt.

5. Verfahren nach einem der vorhergehenden Ansprüche, dadurch gekennzeichnet, daß die Hülse (7; 107; 207; 307; 407) den Zylinder (8; 108) bis auf einen Spalt (14) zwischen ihren einander zugewandten Kanten (10, 12; 110, 112; 210, 212; 310, 312; 410, 412) von 0,02 bis 0,05 mm umschließt.

6. Verfahren nach einem der vorhergehenden Ansprüche, dadurch gekennzeichnet, daß als Partikelstrahlbehandlung eine Sandstrahlbehandlung angewandt wird.

7. Verfahren nach einem der vorhergehenden Ansprüche, dadurch gekennzeichnet, daß die einander zugewandten Kanten (10, 12; 110, 112; 210, 212; 310, 312; 410, 412) wenigstens an ihren Enden miteinander verschweißt werden.

8. Verfahren nach Anspruch 7, dadurch gekennzeichnet, daß die einander zugewandten Kanten (10, 12; 110, 112; 210, 212; 310, 312; 410, 412) mit außen liegender Schweißnaht (16) im Stoß verschweißt werden.

9. Verfahren nach einem der vorhergehenden Ansprüche, dadurch gekennzeichnet, daß die einander zugewandten Kanten (110, 112; 210, 212; 310, 312) in Anpassung an die Form der Stanzstege (104; 204; 304) gekrümmt sind.

10. Verfahren nach einem der Ansprüche 2 bis 9, dadurch gekennzeichnet, daß der Zylinder (108) auf seiner Umfangsfläche nur längs eines axialen Streifens (109) magnetisiert ist.

11. Verfahren nach einem der vorhergehenden Ansprüche, dadurch gekennzeichnet, daß die Stirnseiten des Zylinders (108) in Lagerzapfen (113, 115) übergehen und daß auf dem inneren Ende wenigstens eines Lagerzapfens (113, 115) ein Laufring (117, 119) mit einer Umfangsfläche (121, 123) aufgesetzt ist, die etwas über die Stanzstege (404) übersteht.

12. Vorrichtung mit einer Düse (542), aus der ein Partikelstrahl (512) zu blasen ist, dadurch gekennzeichnet, daß zur Durchführung des Verfahrens nach einem der vorhergehenden Ansprüche, in einem Gehäuse (502) auf einer umlaufenden Mitnehmerwalze (508) austauschbar ein Widerlagerhohlzylinder (510) angeordnet ist, über den von einer Seite aus ein planes, mit Stanzstegen (4; 104; 204; 304; 404) versehenes Stahlblech (2) zu schieben ist, und daß oberhalb des Widerlagerhohlzylinders (510) eine im wesentlichen radial zum Widerlagerzylinder (510) in Axialrichtung des Widerlagerzylinders (510) hin- und herbewegbare Düse (542) angeordnet ist, aus der von oben der Partikelstrahl (512) auf das Stahlblech (2) zu blasen ist.

13. Vorrichtung nach Anspruch 12, dadurch gekennzeichnet, daß sich in dem Gehäuse (502) neben der Oberseite des Widerlagerzylinders (510) eine Zuführungsklemmlinie (514) zwischen zwei synchron zu dem Widerlagerzylinder (510) angetriebenen Zuführungswalzen (516, 518) für das Stahlblech (2) befindet.

14. Vorrichtung nach Anspruch 13, dadurch gekennzeichnet, daß das Gehäuse (502) in Höhe der Zuführungsklemmlinie (514) eine Zuführungsöffnung (520) für das Stahlblech (2) aufweist, in die das Stahlblech (2) mittels einer außerhalb des Gehäuses (502) am Gehäuse (502) angeordneten Fördereinrichtung (522) einzuführen ist.

15. Vorrichtung nach einem der Ansprüche 12 bis 14, dadurch gekennzeichnet, daß das Gehäuse (502) einen Sammelraum (536) für die Partikel des Partikelstrahls (512) aufweist und daß von diesem Sammelraum (536) eine Ansaugleitung (538) für die Partikel ausgeht, die in der Düse (542) mündet.

16. Vorrichtung nach Anspruch 15, dadurch gekennzeichnet, daß von dem Gehäuse (502) oberhalb des Sammelraums (536) wenigstens eine Ansaugleitung (550, 552, 554) abgeführt ist, die in einer mit einem Staubfilter versehenen Absaugvorrichtung (556) endet.

17. Vorrichtung nach einem der Ansprüche 12 bis 16, dadurch gekennzeichnet, daß oberhalb des Widerlagerzylinders (510) in dem Gehäuse (502) ein absenkbarer und anhebbarer Niederhalter (558) zum Andrücken des Stahlblechs an die Oberseite des Widerlagerzylinders (510) angeordnet ist.

## Claims

1. A process for the production of a plate which is used for punching sheet-type material, in particular label material, is bent from a flat steel sheet (2), is to be arranged as a press fit on a supporting roller (18) and whose external surface is provided with punching bridges (4; 104; 204; 304; 404) which are formed by etching the steel sheet (2) and which are preferably sharpened in knife fashion, which comprises pushing a flat steel sheet (2), whose external surface is provided with the punching bridges (4; 104; 204; 304; 404), over a replaceable backing cylinder (8; 510), which essentially has the same radius as the supporting roller (18) and revolves in a housing (502), from one side of said backing cylinder (8; 510), blasting the steel sheet (2) essentially radially to the backing cylinder (8; 510) with a particle jet (512) which moves to and fro in the axial direction of the backing cylinder (8; 510) and joining the mutually facing edges (10, 12; 110, 112; 210, 212; 310, 312; 410, 412) of the resultant bent plate on the supporting roller (18) or on a cylinder (108), which essentially has the same radius as the supporting roller (18), to each other to form a sleeve (7; 107; 207; 307; 407).

2. The process as claimed in claim 1, wherein the cylinder (8; 108) is provided at least section-wise with a magnetized circumferential surface (6).

3. The process as claimed in claim 1 or 2, wherein the steel sheet (2) has the grade C 67 according to DIN 17 222/1544 P.

4. The process as claimed in one of the preceding claims, wherein the thickness of the steel sheet (2) is 0.35 to 1.2 mm, preferably 0.4 to 1.1 mm.

5. The process as claimed in one of the preceding claims, wherein the sleeve (7; 107; 207; 307; 407) encloses the cylinder (8; 108) except for a slit (14) between its mutually facing edges (10, 12; 110, 112; 210, 212; 310, 312; 410, 412) of 0.02 to 0.05 mm.

6. The process as claimed in one of the preceding claims, wherein the particle jet treatment employed is a sand jet treatment.

7. The process as claimed in one of the preceding claims, wherein the mutually facing edges (10, 12; 110, 112; 210, 212; 310, 312; 410, 412) are welded together at least at their ends.

8. The process as claimed in claim 7, wherein the mutually facing edges (10, 12; 110, 112; 210, 212; 310, 312; 410, 412) are butt-welded with an externally situated weld (16).

9. The process as claimed in one of the preceding claims, wherein the mutually facing edges (110, 112; 210, 212; 310, 312) are curved to match the shape of the punching bridges (104; 204; 304).

10. The process as claimed in one of claims 2 to 9, wherein the cylinder (108) is magnetized on its circumferential surface only along an axial strip (109).

11. The process as claimed in one of the preceding claims, wherein the end faces of the cylinder (108) are adjoined by bearing journals (113, 114) and wherein a raceway (117, 119) having a circumferential surface (121, 123) which projects somewhat over the punching bridges (404) is mounted on the inner end of at least one bearing journal (113, 115).

12. An appliance having a nozzle (542), from which a particle jet (512) is to be blown, wherein, for carrying out the process as claimed in one of the preceding claims, a hollow backing cylinder (510) is arranged replaceably in a housing (502) on a revolving driving roller (508), over which cylinder a planar steel sheet (2), provided with punching bridges (4; 104; 204; 304; 404), is to be pushed from one side and wherein a nozzle (542) which moves to and fro essentially radially to the backing cylinder (510) in the axial direction of the backing cylinder (510) is arranged above the hollow backing cylinder (510), from which nozzle the particle jet (512) is to be blown from above onto the steel sheet (2).

13. An appliance as claimed in claim 12, wherein a feed clamping line (514) is situated in the housing (504) next to the top of the backing cylinder (510) between two feed rollers (516, 518) for the steel sheet which are driven synchronously with the backing cylinder (510).

14. The appliance as claimed in claim 13, wherein the housing (502) has, at the level of the feed clamping line (514), a feed opening (520) for the steel sheet into which the steel sheet is to be fed by means of a conveying device (522) arranged outside the housing (502) on the housing (502).

15. The appliance as claimed in one of claims 12 to 14, wherein the housing (502) has a collecting chamber (536) for the particles of the particle jet (512) and wherein a suction line (538) for the particles originates from said collecting chamber (536), which suction line opens into the nozzle (542).

16. The appliance as claimed in claim 15, wherein at least one suction line (550, 552, 554) is led from the housing (502) above the collecting chamber (536) which suction line terminates in a suction appliance (556) provided with a dust filter.

17. The appliance as claimed in one of claims 12 to 16, wherein a hold-down device (558) which can be lowered and raised to press the steel sheet against the top of the backing cylinder (510) is arranged in the housing (502) above the backing cylinder (510).

## Revendications

1. Procédé de fabrication d'une plaque cintrée à partir d'une tôle d'acier plane (2), servant au découpage d'un matériau en feuilles, en particulier d'un matériau à étiquettes, conçue pour être disposée avec assise ajustée sur un cylindre de support (18), et dont la surface extérieure est munie de nervures de découpage (4 ; 104 ; 204 ; 304 ; 404) - de préférence effilées à la manière de tranchoirs -, formées par attaque corrosive de la tôle d'acier (2),
caractérisé par le fait
qu'une tôle d'acier plane (2), dont la surface extérieure est munie des nervures de découpage (4 ; 104 ; 204 ; 304 ; 404), est enfilée sur un cylindre remplaçable de contre-appui (8 ; 510) accomplissant une rotation dans un boîtier (502) et présentant, pour l'essentiel, le même rayon que le cylindre de support (18), à partir de l'un des côtés de ce cylindre de contre-appui (8 ; 510) ; par le fait qu'un jet de particules (512), animé d'un va-et-vient dans la direction axiale du cylindre de contre-appui (8 ; 510), est projeté pneumatiquement sur la tôle d'acier (2), pour l'essentiel dans le sens radial par rapport au cylindre de contre-appui (8 ; 510) ; et par le fait que les arêtes (10, 12 ; 110, 112 ; 210, 212 ; 310, 312 ; 410, 412), mutuellement opposées, de la plaque cintrée ainsi obtenue, sont reliées les unes aux autres sur le cylindre de support (18), ou bien sur un cylindre (108) présentant sensiblement le même rayon que le cylindre de support (18), en vue de former un manchon (7 ; 107 ; 207 ; 307 ; 407).

2. Procédé selon la revendication 1, caractérisé par le fait que le cylindre (8 ; 108) est pourvu, au moins par zones, d'une surface périphérique magnétisée (6).

3. Procédé selon la revendication 1 ou 2, caractérisé par le fait que la tôle d'acier (2) présente la qualité C 67 selon la norme DIN 17222/1544P.

4. Procédé selon l'une des revendications précédentes, caractérisé par le fait que l'épaisseur de la tôle d'acier (2) mesure de 0,35 à 1,2 mm, préférentiellement de 0,4 à 1,1 mm.

5. Procédé selon l'une des revendications précédentes, caractérisé par le fait que le manchon (7 ; 107 ; 207 ; 307 ; 407) entoure le cylindre (8 ; 108) en réservant un interstice (14) de 0,02 à 0,05 mm entre ses arêtes (10, 12 ; 110, 112 ; 210, 212 ; 310, 312 ; 410, 412) mutuellement opposées.

6. Procédé selon l'une des revendications précédentes, caractérisé par le fait qu'un traitement par jets de sable est appliqué en tant que traitement par jets de particules.

7. Procédé selon l'une des revendications précédentes, caractérisé par le fait que les arêtes (10, 12 ; 110, 112 ; 210, 212 ; 310, 312 ; 410, 412) mutuellement opposées sont solidarisées par soudage au moins à leurs extrémités.

8. Procédé selon la revendication 7, caractérisé par le fait que les arêtes (10, 12 ; 110, 112 ; 210, 212 ; 310, 312 ; 410, 412) mutuellement opposées sont soudées bord à bord, avec cordon de soudure (16) ménagé extérieurement.

9. Procédé selon l'une des revendications précédentes, caractérisé par le fait que les arêtes (110, 112 ; 210, 212 ; 310, 312) mutuellement opposées sont courbées avec adaptation à la forme des nervures de découpage (104 ; 204 ; 304).

10. Procédé selon l'une des revendications 2 à 9, caractérisé par le fait que le cylindre (108) est magnétisé, sur sa surface périphérique, uniquement le long d'une bande axiale (109).

11. Procédé selon l'une des revendications précédentes, caractérisé par le fait que les faces extrêmes du cylindre (108) se prolongent par des tourillons de portée (113, 115) ; et par le fait qu'une bague de roulement (117, 119), mise en place sur l'extrémité interne d'au moins un tourillon de portée (113, 115), présente une surface périphérique (121, 123) faisant sensiblement saillie au-delà des nervures de découpage (404).

12. Dispositif muni d'une buse (542) à partir de laquelle un jet de particules (512) doit être projeté pneumatiquement, caractérisé par le fait que, pour la mise en oeuvre du procédé selon l'une des revendications précédentes, un boîtier (502) renferme un cylindre creux de contre-appui (510) implanté de manière interchangeable sur un cylindre rotatif d'entraînement (508), et sur lequel doit être enfilée, à partir d'un côté, une tôle d'acier plane (2) dotée de nervures de découpage (4 ; 104 ; 204 ; 304 ; 404) ; et par le fait qu'une buse (542), disposée au-dessus du cylindre creux de contre-appui (510), peut être animée d'un va-et-vient dans la direction axiale du cylindre de contre-appui (510), pour l'essentiel dans le sens radial par rapport audit cylindre de contre-appui (510) buse à partir de laquelle le jet de particules (512) doit être projeté pneumatiquement, de haut en bas, sur la tôle d'acier (2).

13. Dispositif selon la revendication 12, caractérisé par le fait qu'une ligne (514) de coincement à l'arrivée se trouve dans le boîtier (502), à côté de la face supérieure du cylindre de contre-appui (510), entre deux cylindres (516, 518) d'amenée de la tôle d'acier (2) qui sont entraînés en synchronisme avec le cylindre de contre-appui (510).

14. Dispositif selon la revendication 13, caractérisé par le fait que le boîtier (502) comporte, à la hauteur de la ligne (514) de coincement à l'arrivée, un orifice (520) d'amenée de la tôle d'acier (2) dans lequel la tôle d'acier (2) doit être introduite au moyen d'un système de convoyage (522) disposé sur le boîtier (502), à l'extérieur dudit boîtier (502).

15. Dispositif selon l'une des revendications 12 à 14, caractérisé par le fait que le boîtier (502) présente un compartiment (536) collecteur des particules du jet de particules (512) ; et par le fait qu'un conduit (538) d'aspiration des particules, partant de ce compartiment collecteur (536), débouche dans la buse (542).

16. Dispositif selon la revendication 15, caractérisé par le fait qu'au moins un conduit d'aspiration (550, 552, 554), partant du boîtier (502) au-dessus du compartiment collecteur (536), s'achève dans un dispositif (556) d'évacuation par aspiration qui est équipé d'un filtre à poussières.

17. Dispositif selon l'une des revendications 12 à 16, caractérisé par le fait qu'une pièce (558) de compression vers le bas, abaissable et relevable, est disposée dans le boîtier (502) au-dessus du cylindre de contre-appui (510), en vue de presser la tôle d'acier contre la face supérieure dudit cylindre de contre-appui (510).
